(19) Europäisches Patentamt
European Patent Office
Office européen des brevets

(11) EP 0 947 527 A1

# (12) EUROPEAN PATENT APPLICATION

(43) Date of publication:
**06.10.1999 Bulletin 1999/40**

(21) Application number: **99106664.8**

(22) Date of filing: **01.04.1999**

(51) Int. Cl.$^6$: **C08F 293/00**, C08F 2/38, C08F 8/18, C08F 14/16, C09J 153/00, C09D 153/00

(84) Designated Contracting States:
**AT BE CH CY DE DK ES FI FR GB GR IE IT LI LU MC NL PT SE**
Designated Extension States:
**AL LT LV MK RO SI**

(30) Priority: **03.04.1998 US 54612**

(71) Applicant:
**THE B.F. GOODRICH COMPANY**
**Richfield, Ohio 44286-9368 (US)**

(72) Inventors:
- **Pouraiimady, Naser**
  **Solon, Ohio, 44139 (US)**
- **Peters, Carrie A.**
  **Shaker Heights, Ohio 44120 (US)**

(74) Representative:
**von Kreisler, Alek, Dipl.-Chem. et al**
**Patentanwälte,**
**von Kreisler-Selting-Werner,**
**Bahnhofsvorplatz 1 (Deichmannhaus)**
**50667 Köln (DE)**

## (54) Waterborne block copolymers and process for making the same

(57) A controlled free-radical polymerization process for forming waterborne block copolymers is disclosed, particularly by degenerative iodine transfer or atom transfer radical polymerization processes. The polymers are characterized by a polydispersity less than 2.5 and a predetermined molecular weight. The polymers are useful as coatings and adhesives, including as toughening agents, compatibilizing agents, and the like.

EP 0 947 527 A1

## Description

### BACKGROUND OF THE INVENTION

#### 1. Field of the Invention

This invention relates to polymers and processes for making the same. More particularly, the invention relates to a controlled free-radical polymerization process for forming waterborne block copolymers, particularly by a degenerative iodine transfer and atom transfer radical polymerization processes. The resultant polymers have a polydispersity less than 2.5, a predetermined molecular weight, and are useful as coatings and adhesives, including as binding, toughening, compatibilizing agents. and the like.

#### 2. Description of the Prior Art

Demand for high-performance materials in commercial applications has created the need for polymers with controlled architecture. The current free radical polymerization processes, result in chaotic process and produce polymers with uncontrolled molecular weight and very broad polydispersity. When more than one monomer is used, the current methods provide either a random copolymer or a non-uniform mixture of homopolymers.

In living polymerization processes the chain terminating events are eliminated or minimized, therefore, polymers with desired architecture can be created by sequential addition of different monomers. Commercial anionic living polymerization processes require organic solvent and stringent conditions which are costly and have limited applications. Currently, styrene-butadiene block copolymers are manufactured by commercial anionic process and commercialized under the trade-name Kraton® rubbers by Shell Chemical Company. This process utilizes an anionic polymerization catalyst which is moisture sensitive and can not be applied in aqueous media. Furthermore, the common anionic polymerization catalysts are intolerant of functional groups containing oxygen, nitrogen, sulfur, and other nucleophilic species. Therefore, only a limited number of monomers can be polymerized by this method. Commercial anionic methods do not work well with acrylates, methacrylates, acrylonitrile, vinyl acetate, acrylic acids, and halogenated monomers. Current, free radical polymerization processes, are robust, and can be carried out in the presence of water and other nucleophilic organic solvents. However, control of polymer architecture is not possible with these processes.

Controlled free-radical polymerization processes, including degenerative iodine transfer (DIT) and atom transfer radical polymerization (ATRP), are prior art processes for living free-radical polymerization. In degenerative iodine transfer polymerization process, chain growth is controlled by the iodine atoms, which reversibly react with the reactive polymer chains, and limits the side reactions. The iodine atoms are introduced into the reaction using iodine transfer reagents. The polymer radicals are initially generated with a small amount of a conventional initiator.

In ATRP, a combination of an activated alkyl halide, a transition metal halide, and an organic ligand, is used to initiate and control the chain growth. An alternate ATRP process, where the polymerization is started by a conventional free radical initiator, and controlled by a transition metal halide-organic ligand complex.. is also described. In both ATRP processes, the control over the architecture of chain is achieved by a reversible insertion of a chlorine or bromine atom at the end of the growing polymer chain, and a sequential addition of monomers to create the desired block copolymer structure.

Application of the degenerative transfer process in the production of polymers is disclosed in Japanese Kokai No. 4-132706 (1992), assigned to Nippon Shokubai, in which a DIT process is employed in an organic solvent to produce telechelic polymers. The reagent used has a formula X-R-X , wherein X is bromine or iodine and R is a C1-C8 hydrocarbon. However, the reagents used in the Japanese invention are not efficient and so the process requires a great excess of the iodo reagents (0.01-10 mols monomer per mol of the reagent). Further, the molar ratio of halide reagent to conventional initiator is extremely high, being on the order of 50 to 500 to 1.

United States Patent No. 5,439,980 issued in 1995 to Daikin Industries discloses a DIT process wherein the process is carried out in bulk or in the presence of organic solvents and where the block copolymers are synthesized using an iodine reagent and two monomers, which are added simultaneously. The process relies on large reactivity differences between the monomers for it to work.

United States Patent No. 5,455,319 issued in 1995 to Geon describes the use of a DIT process to produce vinyl chloride homopolymers and some random copolymers of vinyl chloride. The iodine transfer reagents employed in the '319 Patent are efficient in that they are activated reagents. But, the DIT polymerization process in an aqueous media is described only for vinyl chloride polymers, and does not teach or address making polymers with controlled molecular weights or block copolymer architectures by sequential addition of monomers.

K. Matyjaszewsky, et al. in *Macromolecules*, Vol. 28, pages 2093-2095 and 8051-8056 (1995) describe a process for controlled polymerization using iodine compounds. The disclosed process appears to be neither efficient with

respect to the use of transfer agents nor does it disclose a process suitable for making waterborne block copolymers.

Atom transfer radical polymerization (ATRP) is also described in the prior art. For example, WO 96/304212 to Matyjaszewski and Carnegie-Mellon University describes metal catalyzed free-radical polymerization using an alkylhalide initiator to control the polymerization. Preparation of block copolymers by this process is also disclosed. But, this process uses bulk and/or solution polymerization and no process for emulsion polymerization in aqueous media is disclosed or suggested.

The current atom transfer radical polymerization process can produce products with more uniform and more highly controlled architecture. The polymerization process includes steps of polymerizing, by a free radical mechanism, one or more monomers, in the presence of an initiator having a transferable atom or group, and a transition metal compound and a ligand, to form a (co)polymer. The transition metal compound has a formula $ML_n$, and the ligand L being any N-,O-,P-, or S- containing compound, which can coordinate in a bond to the transition metal. such that direct bonds between the transition metal in growing polymer radicals are not formed. The formed copolymer is then isolated.

While there are a variety of processes for polymerization via controlled radical polymerization in bulk or organic solutions, the need exists for a waterborne process capable of providing a polymer with desired architecture, predictable molecular weight, and low polydispersity. The process must be sufficiently flexible to control molecular weight as well as polymer architecture. The process should also provide a cost-efficient controlled free radical polymerization in water. The present invention describes the application of living free radical polymerization methods in heterogeneous aqueous polymerization, including a controlled emulsion polymerization process for preparation of block copolymer emulsions.

## BRIEF SUMMARY OF THE INVENTION

The present invention provides a controlled free-radical polymerization process for making waterborne block copolymers and the resulting unique copolymers. Degenerative iodine transfer polymerization and atom transfer radical polymerization in heterogeneous aqueous media are preferred polymerization processes. The resulting polymers have a predictable molecular weight, low polydispersity, and sequential distribution of monomer units along the backbone. These polymers also contain a halogen atom at one or both chain-ends. The degenerative iodine transfer process of the present invention employs efficient monofunctional and difunctional transfer agents, suitable for controlled free radical polymerization in aqueous media. The resultant polymers are useful as adhesives, coatings for textiles and graphic arts, binding for glass and cellulose fabrics, toughening additives for plastic molding compounds, paints and coatings for plastic and metal substrates, compatibilizing agents, adhesion promotion, leveling agents, and rheology modifiers in waterborne coatings, and the like.

## DETAILED DESCRIPTION OF THE PREFERRED EMBODIMENT

The present invention relates to waterborne block copolymers made by a controlled free-radical polymerization process, especially to the formation of block copolymers. The controlled free-radical polymerization processes preferably are degenerative iodine transfer and atom transfer radical polymerizations.

The DIT process of the present invention is used to form polymers with one or more iodine end groups. The process involves heating a heterogeneous mixture of an activated iodide reagent having at least one iodine end group, a free-radical initiator, an emulsifier, and at least one polymerizable monomer, in water. The aqueous mixture may or may not contain a seed polymer emulsion. The use of a seed polymer is well known and conventional in free-radical polymerization to make latex polymers. Preferably, the heterogeneous aqueous process of the invention involves the addition of a pre-emulsified aqueous mixture of one or more monomers, to a mixed pre-heated aqueous mixture of an iodine transfer reagent and a free radical initiator to form an iodine-terminated homopolymer or copolymer. Next, a second monomer or mixture of monomers, is added to the reaction mixture to form a polymer block, tailored to the end of the existing polymer or first block, as illustrated below. The process can be repeated with a third monomer or a mixture of monomers to form a third block. Both the first monomer ($M_1$) and the second monomer ($M_2$) can be monoethylenically unsaturated monomers in accordance with the present invention, or are a mixture of monomers. The first and second monomers will be different. They can also contain up to 5% of a functional or difunctional monomer or monomers, including a reactive functional groups such as those containing an acid, hydroxyl, epoxy, acetoxy, amide or substituted amide groups, or a mono or difunctional self-crosslinking monomers, such as N-methylol acrylamide, or methylene-bis-acrylamide.

In the illustrations, $R_1$, $R_2$, Z, $Z_1$, and $Z_2$, represent substituent groups on the iodine transfer reagents.

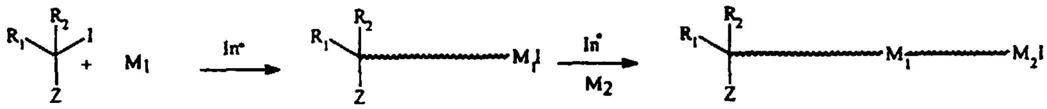


The process can also employ a difunctional iodine-transfer reagent, where the polymer chain grows from two sides of the reagent. This process preferably forms triblock and multiblock copolymers, as illustrated below.

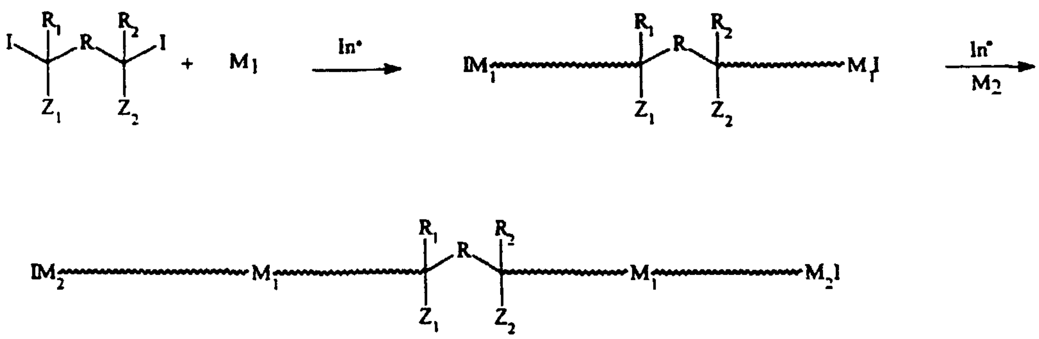


The iodide reagents of the subject DIT process contain one or more radical stabilizing groups, attached to the carbon(s) adjacent to the iodine atoms. These groups activate the reagents towards iodine transfer and makes the reagents efficient.

The iodide reagents employed are preferably selected from two types: (Type 1) monoiodide reagents, $R_1R_2CI$-Z; and (Type 2) diiodide reagents, $R_1C(I)_2$-Z, $R_1R_2CI$-Z-$CIR_3R_4$ or $R_1R_2CI$-$Z_1$-R-$Z_2$-$CIR_3R_4$.

The mono-iodide reagents of Type 1 are suitable for making diblock and triblock copolymers of the type AB and ABC, whereas the diiodide reagents of the type 2 are more suitable for preparation of triblock and multiblock copolymers of the type ABA, BABAB, ABCBA, and the like, although ABA triblock copolymers could be made using a type 1 monoiodine reagent.

The monoiodide reagents are of the formula:

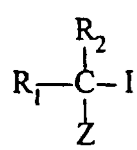

where $R_1$ and $R_2$ are independently selected from hydrogen, halogen, alkyl, aryl, aralkyl, alkaryl, and alkoxy groups. The radical stabilizing Z group has 1-50 carbon atoms and can be an aryl, alkene, ester, acid, amide, ketone, nitrile, halogen, isocyanate, and nitro. Examples of the radical stabilizating group include $C_6H_4Me$, OC(=O)-Me, F, and CN. Preferred $R_1R_2CI$-Z reagents are depicted below:

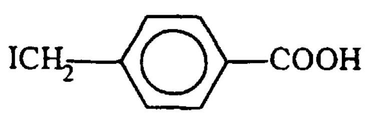

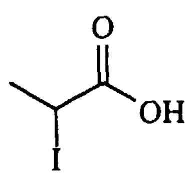

The di-iodide reagents with one or more activating groups are of the formula:

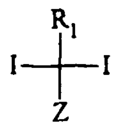
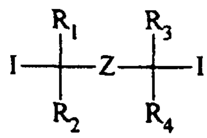
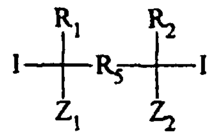
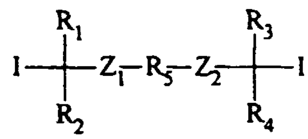

where $R_1$, $R_2$, $R_3$, and $R_4$, independently are selected from hydrogen, halogen, alkyl, aryl, alkaryl, aralkyl, or alkoxy groups containing 1-50 carbon atoms. $R_5$ is a disubstituted alkyl or aryl group containing 1-50 carbon. The radical stabilizing groups, Z, $Z_1$, and $Z_2$ attached to the carbon adjacent to the iodine atoms are independently chosen from: alkene, ester, acid, nitrile, halogen, amide, carboxylate, aryl, substituted aryl, and nitro.

Examples of Z, $Z_1$, and $Z_2$, include OC(=O)-Me, F, COOH and CN. Preferred diiodide reagents of the type 2 are depicted below:

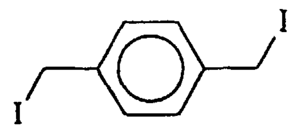
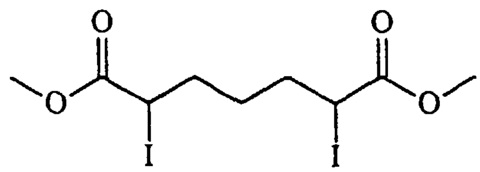

The iodide reagent selected for the polymerization is dependent on the type of monomer and the architecture desired. A balance between the rate of transfer and the rate of reinitiation needs to be maintained. For example, iodotoluic acid is a suitable reagent for the polymerization of styrene and η-butyl acrylate. But it does not work properly for the polymerization of vinylacetate or vinylidene chloride, because the radical formed after transfer is not reactive enough for reinitiation. To the contrary, methylene iodide does not transfer quickly enough to effect the polymerization of styrene or η-butyl acrylate. For the polymerization of vinyl acetate, perfluorohexyliodide is more suitable instead of iodotoluic acid.

The ATRP process described in the invention is used to prepare polymers with a halogen, preferably chlorine or bromine at one or both chain-ends. The process involves heating a heterogeneous aqueous mixture of monomer(s), a transition metal halide at its oxidized state, an organic ligand, a free radical initiator, and an emulsifier, to form a homopolymer or copolymer with a halogen chain-end. In the case of block copolymers, an aqueous emulsion of a second monomer(s) is added to form a second block. Alternatively, a combination of an organic halide containing an activated halogen and a transition metal halide at its lower reduced state are used. In the alternate case, no free radical initiator is needed. Another alternative uses a combination of transition metal halide at its oxidized state and a metallic form of the same transition metal to initiate polymerization.

Examples of transition metal halides at their oxidized state are Cu(II) bromide, Cu(II) chloride, Fe(III) chloride, Ni(III) bromide. Examples of the transition metal halides at their reduced state are, Cu(I) chloride, Cu(I) bromide, Fe(II) chloride, Fe(II) bromide, and Ni(II) bromide.

The halide reagents of the subject ATRP process contain one or more radical stabilizing groups, attached to the carbon(s) adjacent to the halogen atoms. These groups activate the halogen-carbon bond to a reversible homolytic cleavage at the presence of a transition metal salt, thus initiation of a free radical chain reaction. Therefore, the presence of these activating functional groups makes the reagents more efficient.

The halide reagents employed are preferably selected from two types: (Type 1) mono-halide reagents, $R_1R_2CX\text{-}Z$; and (Type 2) di-halide reagents, $R_1C(X)_2\text{-}Z$, $R_1R_2CX\text{-}Z\text{-}CXR_3R_4$ or $R_1R_2CX\text{-}Z_1\text{-}R\text{-}Z_2\text{-}CXR_3R_4$.

The mono-halide reagents of Type 1 are suitable for making diblock and triblock copolymers of the type AB and ABC, whereas the di-halide reagents of the type 2 are more suitable for preparation of triblock and multiblock copolymers of the type ABA, BABAB, ABCBA, and the like, although ABA triblock copolymers could be made using a type 1 mono-halide reagent.

The mono-halide reagents are of the formula:

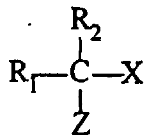

where $R_1$ and $R_2$ are independently selected from hydrogen, halogen, alkyl, aryl, aralkyl, alkaryl, and alkoxy groups. The halogen X is preferably chlorine or bromine. The radical stabilizing Z group has 1-50 carbon atoms and can be an aryl, alkene, ester, acid, amide, ketone, nitrile, halogen, and nitro. Examples of the radical stabilizing group include $C_6H_4Me$, OC(=O)-Me, F, and CN. Preferred $R_1R_2CX$-Z reagents are depicted below:

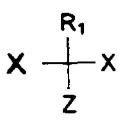 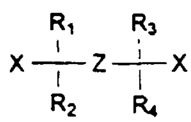 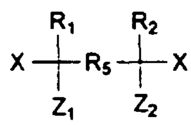 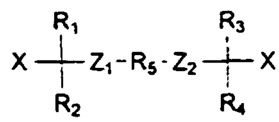

The di-halide reagents with one or more activating groups are of the formula:

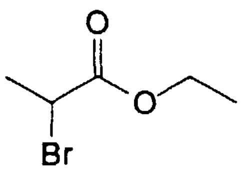 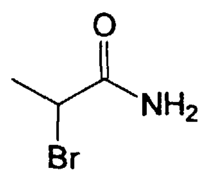

where $R_1$, $R_2$, $R_3$, and $R_4$, independently are selected from hydrogen, halogen, alkyl, aryl, alkaryl, aralkyl, or alkoxy groups containing 1-50 carbon atoms. $R_5$ is a disubstituted alkyl or aryl group containing 1-50 carbon. The X is preferably chlorine or bromine. The radical stabilizing groups, Z, $Z_1$ and $Z_2$ attached to the carbon adjacent to the halogen atoms are independently chosen from: alkene, ester, acid, nitrile, halogen, amide, carboxylate, aryl, substituted aryl, and nitro. Examples of Z, $Z_1$, and $Z_2$ include OC(=O)-Me, F, COOH and CN. Preferred dihalide reagents of the type 2 are depicted below:

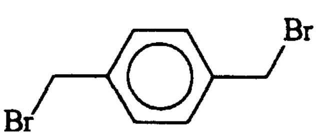 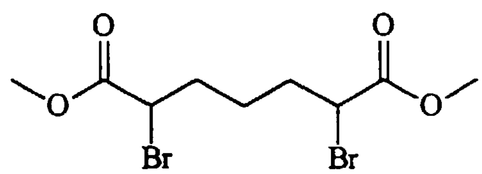

The halide reagent selected for the polymerization is dependent on the type of monomer and the architecture desired.

The suitable free-radical initiators useful in the practice of the present invention include any conventional free radical initiators known in the art. These initiators can include oxygen, hydroperoxides, peresters, percarbonates, peroxides, persulfates and azo initiators. Specific examples of some initiators include hydrogen peroxide, tertiary-amyl peroxide, dibenzoyl peroxide (BPO), potassium persulfate, and tertiary-butyl hydroperoxide (TBHP).

In the preferred embodiment, the free-radical initiators are azo-initiators such as azobisisobutyronitrile (AIBN), azobiscyanovaleric acid (ADVA), azobis (hydroxyethylcyanovaleramide) (VA-080), azobis (cyclohexanecarbonitrile), 2,2' azobis (4-methoxy-2,4-dimethylvaleronitrile), 2,2'-azobis[2-methyl-N-(2-hydroxyethyl)propionamide]. The most preferred free-radical initiator is azobis (hydroxyethylcyanovaleramide) (VA-080). The molar ratio of the free radical initiator

to the reagent is from 1:1 up to 1:100, preferably 1:1 to 1:3.

The emulsifier used for the process of invention are conventional anionic and non-ionic emulsifiers used for emulsion polymerization. Examples of anionic emulsifiers which may be used are: alkali metal or ammonium salts of the sulfates of alcohols having from 8 to 18 carbon atoms, such as sodium dodecyl sulfate (SLS), ammonium lauryl sulfonate, and ethanolamine lauryl sulfate; alkali metal and ammonium salts of sulfonated petroleum or paraffin oils, such as dodecane-1-sulfonic acid; sodium salts of aromatic sulfonic acids and aralkylsulfonates such as sodium isopropylbenzene sulfonate and sodium isobutyl naphthalene sulfonate; alkali metal and ammonium salts of sulfonated dicarboxylic acid esters such as, sodium dioctylsulfosuccinate, and disodium N-octadecyl-sulfosuccinamate; alkali metal or ammonium salts of free acids of complex organic mono and diphosphate esters and the like. So called non-ionic emulsifiers such as octyl or nonylphenyl polyethoxyethanol and the like may also be used.

The amount of emulsifier used can be from about 0.01 to 5% by weight of the monomers. All of the emulsifier may be added at the beginning of the polymerization or may be added incrementally or by proportioning throughout the run.

Suitable monomers for use in the present invention may be monoethylenically unsaturated monomers. Typical monoethylenically unsaturated monomers suitable for use in the invention include alkyl esters of acrylic or methacrylic acids such as methyl acrylate, ethyl acrylate, butyl acrylate; hydroxyalkyl esters of acrylic or methacrylic acid such as hydroxyethyl acrylate, hydroxypropyl acrylate, hydroxyethyl methacrylate, and hydroxypropyl methacrylate; acrylamide, methacrylamide, N-tertiary butylacrylamide, N-methylacrylamide, N,N-dimethyl acrylamide; acrylonitrile, methacrylonitrile, dimethylaminoethyl acrylate, dimethylaminoethyl methacrylate, phosphoethyl methacrylate, N-vinyl pyrrolidone, N-vinylformamide, N-vinylimidazole, vinyl acetate, styrene, hydroxylated styrene, styrenesulfonic acid and salts thereof, vinylsulfonic acid and salts thereof, and 2-acrylamido-2-methylpropanesulfonic acid and salts thereof.

Other monomers include halogenated vinylic monomers such as vinyl chloride, vinylidene chloride, vinylidene fluoride, halogenated diene monomers such as chloroprene, and non-halogenated diene monomers such as butadiene and isoprene.

Suitable functional monomers which can be incorporated into each block by copolymerization with the monomers of the invention include (meth)acrylic acid, (meth)acrylamides, alkyl and aryl amide derivatives thereof, and quaternized alkyl and aryl acrylamide derivatives. The acid monomers useful in this invention may be in their acid forms or in the form of the alkaline metal or ammonium salts of the acid. Suitable bases useful for neutralizing the monomer acids includes sodium hydroxide. ammonium hydroxide, potassium hydroxide, and the like. The acid monomers may be neutralized to a level of from 0 to 50% and preferably from 0 to about 20%. More preferably, the carboxylic acid monomers are used in the completely neutralized form.

The molar ratio of the polymerizable monomer to the reagent is about 10 to 1,000. In the preferred embodiment, the polymerizable monomers are $\eta$-alkyl acrylates, styrene, and acrylonitrile.

The monomers can be added pure or as combinations with other monomers to form copolymers. Because of the living polymerization character, different monomers can also be added sequentially, eventually leading to block copolymers.

The polymerization step is carried out at 0-150°C, preferably at from 40-90°C. The monomer emulsions are metered into the aqueous mixture of reagent and/or the first polymer emulsion in about 1 to 4 hours.

Typical structure of diblock and triblock copolymers of the invention are illustrated below.

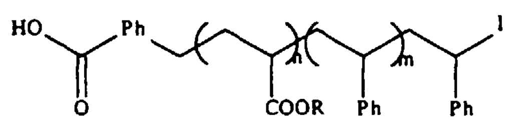

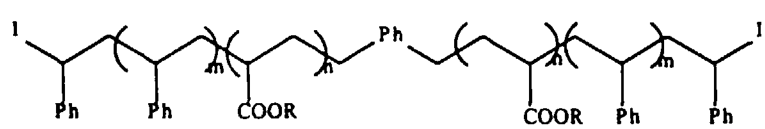

the R group in these polymers is an alkyl group containing 1 to 30 carbon atom, n and m represent the number of repeating units from 0 to 1000.

The molecular weight of the polymers of the invention could be predetermined based on the molar ratio of monomer to the iodine transfer reagent used. Likewise, the mole ratio of monomer/reagent could be selected to produce a polymer with desired molecular weight. The theoretical molecular weight is then equal to moles of monomer/moles of

reagent times the molecular weight of the monomer used.

Applications for the polymers of the present invention include the following:

- Waterborne pressure-sensitive adhesives, contact adhesives, and film-to-film laminating adhesives.
- As tackifier, adhesion promoters and compatibilizers in waterborne polymeric blends.
- As coating materials for textiles and the graphic arts. Waterborne binders for glass and cellulose fibers.
- Waterborne industrial and architectural coatings.
- Binders for textile flock and polyester fibers.
- Compatibilizer and rheology modifiers for molding compounds.

The present invention will now be described in greater detail in the following non-limiting examples. In these examples, polymers are made in accordance with the present invention and are evaluated as follows for some or all of the following properties:

<u>A. Latex Properties:</u> The total solids for the latex (i.e., the waterborne polymer) are run on a Labwave 900 microwave at 80% power. The pH is taken with a Fisher Accumet pH meter. The viscosity is taken on a Brookfield LV viscometer. The surface tension is measured on a Fisher Surface Tensiomat with a 6 centimeter ring. The particle size is measured on a Submicron Particle Sizer from Nicomp. The minimum film forming temperature (MFFT) is measured on a standard minimum film forming temperature bar. The glass transition temperature Tg is measured on a dried sample of the latex. The polydispersity index is the ratio of the weight average molecular weight to the number average molecular weight, which measured by gel permeation chromotography.

<u>B. Film Properties:</u> The tensile strength and elongation of films made with the latexes in accordance with the present invention are measured on 1" wide film strips using an Instron machine with a 2" gauge length and a speed of 2" per minute. MEK swell tests are performed on 1 X 2" film squares placed in a petri dish of MEK (methyl ethyl ketone) for 30 minutes before taking the final measurements of the swelled sample. The percentage of swell is calculated by the following formula:

$$[(\text{final area of film} - \text{original area of film}) / \text{original area of film}] \times 100$$

The films are made by taking the latex, total solid adjusting to 30% by addition of water, and weighing 100 g into a beaker under moderate mixing. Next, approximately 5% of an acrylic polymer or urethane associating thickener was added at a pH of about 4. The latex was then neutralized to 7-8 pH with a 28% ammonia solution. Then, approximately 5% of a surfactant (for these examples, the surfactant was equal portions of Surfynol® 485 and 104H surfactant, which is available from Air Products, although the exact surfactant is not critical) was added under moderate mixing. Next, films are drawn down on polyethylene sheets to a dried thickness of about 0.0015 to 0.003" and air dried for 7 days. Uncured and cured (at 300°F for 10 minutes) samples were evaluated.

**Example 1. Synthesis of nBA Homopolymer Emulsion by DIT Method.**

In a 100-mL reactor, equipped with a mechanical stirrer was placed DM water (14.0 grams), n-butyl acrylate (20.0 grams), and sodium dodecyl sulfonate (SLS, 1.5 grams, 30% solution in water). The mixture was stirred until a stable emulsion was formed. The resulting emulsion was metered in 30 minutes into a 250-mL reactor containing, DM water (24.0 grams), SLS (0.13 grams, 30% solution in water), iodotoluic acid (0.32 grams) and a water-soluble azo initiator, VA-080 (available from Wako Company) (0.16 grams, dissolved in 16.0 grams of DM water) and heated to 85°C. The resulting emulsion was maintained at 85°C for an additional 3 hours until n-butyl acrylate polymerization was completed. A sample of this polymer showed number-average molecular weight of 16,488 (calculated target molecular weight of 16,367) and polydispersity of 2.5.

**Example 2. Poly(nBA)-*b*-Styrene Block Copolymer Emulsion by DIT Method.**

In a 100-mL reactor, equipped with a mechanical stirrer was placed DM water (27.0 grams), n-butyl acrylate (42.0 grams), and sodium dodecyl sulfonate (SLS, 1.5 grams, 30% solution in water). The mixture was stirred until a stable emulsion was formed. The resulting emulsion was metered in 30 minutes into a 250-mL reactor containing, DM water (36.0 grams), SLS (0.2 grams, 30% solution in water), iodotoluic acid (0.21 grams) and a water-soluble azo initiator, VA-080 (0.11 grams, dissolved in 10.5 grams of water) at 80°C. The resulting emulsion was maintained at 80°C for an additional hour until n-butyl acrylate polymerization was completed. A sample of this polymer showed number-average molecular weight of 54,000 and polydispersity of 2.5. An emulsion of styrene (18.0 grams), and SLS (0.7 grams, 30% solution in water), in DM water (15 grams) was prepared and added slowly to the reactor containing the

nBA polymer emulsion, during 10 minutes. The resulting mixture was stirred at 80°C for one additional hour. The copolymer emulsion was cooled to room temperature and filtered through a cheese-cloth to remove coagulum. The block copolymer emulsion was a white milky colloid with 31.3% total solid, number-average molecular weight 84,600 and polydispersity of 2.0.

**Example 3. Poly(nBA)-*b*-(Styrene-Acrylonitrile) Block Copolymer Emulsion by DIT Method.**

This example demonstrates a method for preparation of a block copolymer emulsion, consisting of a n-butyl acrylate block attached to a block of styrene-acrylonitrile random copolymer. In a 100-mL reactor, equipped with a mechanical stirrer was placed DM water (22.5 grams), n-butyl acrylate (30.0 grams), and sodium dodecyl sulfonate (SLS, 1.1 grams, 30% solution in water). The mixture was stirred until a stable emulsion was formed. The resulting emulsion was metered in 30 minutes into a 250-mL reactor containing, DM water (30.0 grams), SLS (0.17 grams, 30% solution in water), iodotoluic acid (0.13 grams) and a water-soluble azo initiator, VA-080 (0.07 grams, dissolved in 7.1 grams of DM water) at 80°C. The resulting emulsion was maintained at 80°C for a additional hour until n-butyl acrylate polymerization was completed. A sample of this polymer showed number-average molecular weight of 56,900. A mixture of styrene (15.0 grams), acrylonitrile (5.0 grams), and SLS (0.75 grams, 30% solution in water), emulsified in water (12.5 grams) was prepared and added slowly to the reactor containing the nBA polymer emulsion, during 10 minutes. The resulting mixture was stirred at 80°C for one additional hour. The copolymer emulsion was cooled to room temperature and filtered through a cheese-cloth to remove coagulum. The block copolymer emulsion was a white milky emulsion with 26.7% total solid, number-average molecular weight 99,000.

**Example 4. Controlled Emulsion Homopolymerization of Styrene by Atom-Transfer Radical Polymerization (ATRP) Method.**

A mixture of styrene (125.0 grams), copper (II) bromide (0.28 grams), 2,2'-dipyridyl (5.75 grams), SLS (5.0 grams, 30% solution in water), and water (205 grams) was placed in a 500-mL reactor, equipped with a mechanical stirrer, condenser, and a nitrogen inlet. The mixture was stirred for 20 minutes and a solution of Vazo 64 (0.25 grams) in 3.1 grams of DM water was added. The resulting mixture was heated at 90°C for 30 hours to complete conversion of styrene monomer to polystyrene. Samples of the polymer at 47% and 96% conversion showed degrees of polymerization equal to 310 and 585 respectively, indicating the chain-growth during polymerization and the living characteristic of the polymerization.

**Example 5. Triblock Poly(Styrene)-*b*-(Ethyl Acrylate)-*b*-(Styrene) Emulsion by DIT Polymerization Method.**

A pre-emulsified mixture of ethyl acrylate (42.0 grams, 70 parts), SLS (1.5 grams, 30% solution in water), and DM water (27.0 grams) was metered into a 250-mL polymerization reactor, equipped with mechanical stirrer, thermocouple, and condenser, and containing a mixture of dimethyl 2,6-diiodoheptanedioate (0.17 grams), SLS (0.2 grams, 30% solution in water), and VA-080 (0.11 grams), placed in DM water (36.0 grams) at 80°C. A second pre-emulsified mixture, containing styrene (18.0 grams), SLS (0.70 grams), and water (15.0 grams) was added sequentially to form blocks of styrene at both ends of ethyl acrylate polymer. Samples were taken and analyzed by GC and GPC for conversion and molecular weights. The monomer conversion at the end of ethyl acrylate addition was 99%, Mn = 128K, polydispersity = 1.86. After addition of styrene blocks, the styrene conversion was 96%, Mn = 158K, and polydispersity = 2.4.

**Example 6. Poly(nBA)-*b*-Styrene Emulsion by ATRP Method.**

A pre-emulsified mixture of n-butyl acrylate (40.0 grams), DM water (24.0 grams) and SLS (0.4 grams, 30% solution) was prepared. In a mechanically stirred reactor, a mixture of DM water (64 grams), SLS (1.2 grams, 30% solution), Cu(I) bromide (0.09 grams), bipyridine (0.46 grams), and 2-bromopropionamide (0.07 grams) was heated to 85°C. The pre-emulsified mixture of n-butyl acrylate was added slowly to the reactor and heating was continued at 85°C for 7.5 hours. Analysis of samples of the polymer emulsion by GPC showed polymer molecular weight at 83% conversion Mn = 82.6K, polydispersity = 2.4 and at 93% monomer conversion, Mn = 92.2K with polydispersity = 2.9. An emulsified mixture of styrene (15.0 grams), SLS (0.40 grams, 30% solution), and DM water (12.8 grams) was slowly added into the reactor and heated at 90°C for 14 hours. The final polymer after 98% conversion of nBA and 73% conversion of styrene showed Mn = 134K and polydispersity equal to 5.4.

**Example 7. Random Copolymer Emulsion of Styrene-nBA-ACN-NMA-AA by DIT Method.**

The polymer of example 7 was prepared according to the procedure described in Example 1, except the reaction was run in a 2-L reactor using a mixture of monomers nBA (58.5 parts, 409.5 grams), styrene (28.0 parts, 196.0 grams), acrylonitrile (10.0 parts, 70.0 grams), acrylic acid (2.0 parts, 14.0 grams) and N-methylol acrylamide (NMA, 1.5 parts, 10.5 grams), pre-emulsified in DM water (336 grams) containing SLS (2.3 grams of 30% solution). A 30% ammonium hydroxide solution (2.3 grams) was also added to the mixture to partially neutralize acrylic acid. The amount of DM water in the reactor prior to addition of the monomer mixture was 555 grams. The resulting random copolymer had total solid content of 36% and molecular weight of Mn = 145K by GPC. The amount of iodotoluic acid reagent and VA-080 initiator used were 1.75 grams and 1.47 grams respectively.

**Example 8. Poly(nBA-NMA)-*b*-(Styrene-ACN-AA) Emulsion by DIT Polymerization Method.**

The polymer of example 8 was prepared according to the procedure described for Example 2. The reaction was carried out in a 2-L reactor containing a mechanically stirred, preheated mixture of DM-water (555.1 gram), SLS (2.3 grams, 30% solution), iodotoluic acid (1.75 grams), and VA-080 initiator (0.98 grams). The initiator and the iodine transfer reagents were added after a small portion of the monomer mixture was metered into the reactor. A pre-emulsified mixture of nBA (409.5 grams), NMA (10.5 grams), and SLS (15.2 grams, 30% solution) in DM-water (231.0 grams) was added into the reactor and polymerized to form the first block, Mn = 194K, polydispersity of 2.3. A second pre-emulsified mixture of styrene (196.0 grams), acrylonitrile (70.0 grams), acrylic acid (14.0 grams), ammonia (2.3 grams, 30% solution), and SLS (10.5 grams) in DM-water (105.0 grams) was added and polymerized to make the second block. Final block copolymer had a total solid content of 38%, molecular weight Mn = 263K, with polydispersity of 3.8.

**Example 9. Random Emulsion Copolymer of Styrene-nBA-AA-ACM by DIT Polymerization Method.**

The polymer of Example 9 was made by the same procedure as in Example 7, using the following monomer composition. Styrene (44.1 parts, 145.5 grams), nBA (52.0 parts, 171.6 grams), acrylic acid (2.9 parts, 9.6 grams), and acrylamide (ACM, 0.5 parts, 6.1 grams of 28% solution). A polymerizable surfactant, sodium methallyl sulphonate (0.5 parts, 1.65 grams) was also used in combination with SLS (0.15 parts, 1.65 grams of 30% solution). The final polymer had molecular weight, Mn = 64,310 and polydispersity of 2.0.

**Example 10. Poly(nBA-ACM)-*b*-(Styrene-AA) Emulsion by DIT Method.**

The block emulsion copolymer of Example 10 was made by the same procedure described for polymer of Example 8 and the monomer composition described for Example 9, except the nBA-ACM mixture were used to make the first block, and styrene-acrylic acid mixture was used for the second block. The first block had molecular weight, Mn = 29,458 with polydispersity of 2.2. The final block copolymer had molecular weight, Mn = 71,900 and polydispersity of 1.7.

**Example 11. A Random Copolymer of nBA-ACM-Styrene-AA Made by a Conventional Emulsion Polymerization Method.**

A random copolymer with monomer composition the same as those of Examples 9 and 10 was made by a conventional emulsion polymerization process known to those skilled in the art and described in the patent literature. The final copolymer had molecular weight, Mn >200K and polydispersity of 28.7.

**Example 12. Poly(nBA)-*b*-(Styrene-ACN-NMA-AA) Emulsion Block Copolymer.**

This polymer was prepared according to the procedure described for the preparation of the polymer of Example 8, except different monomer ratios were used. Thus nBA (42.5 parts, 297.5 grams) was used to make the first block, NMA (1.5 parts, 10.5 grams), styrene (44.0 parts, 308 grams), acrylonitrile (10 parts, 70 grams), acrylic acid (2 parts, 14 grams) were used to make the second block of this copolymer. The molecular weight of the polymer was Mn = 35,200 (PD 2.6) for the first block, and Mn = 49,000 (PD 2.5) for the final block copolymer.

**Example 13. Poly(nBA-NMA)-*b*-(Styrene-ACN-AA) Emulsion Block Copolymer.**

This polymer was prepared using the same procedure as in Example 12 and the same monomer ratio, except the nBA and NMA monomers were incorporated into the first block and styrene, acrylonitrile, and acrylic acid were

placed in a random fashion within the second block. The molecular weight of the first block was Mn = 47,160 (PD 2.6), the final molecular weight of the copolymer was Mn = 108,000 (PD 1.9).

Table 1. Monomer Composition in Block and Random Copolymers of Invention

| Architecture → Monomer ↓ | Random 7 | Diblock 8 | Random 9 | Diblock 10 | Conv. 11 | Diblock 12 | Diblock 13 |
|---|---|---|---|---|---|---|---|
| n-Butyl Acrylate | 58.5 | 58.5 | 52.0 | 52.0 | 52.0 | 42.5 | 42.5 |
| Styrene | 28.0 | 28.0 | 44.1 | 44.1 | 44.1 | 44.0 | 44.0 |
| Acrylonitrile | 10.0 | 10.0 | - | - | - | 10.0 | 10.0 |
| Acrylic Acid | 2.0 | 2.0 | 2.9 | 2.9 | 2.9 | 2.0 | 2.0 |
| NMA | 1.5 | 1.5 | - | - | - | 1.5 | 1.5 |
| Acrylamide | - | - | 0.5 | 0.5 | 0.5 | - | - |

Table 2

Examples of polymer emulsion properties made by the process of the invention.

| Emulsion Property | 7 | 8 | 9 | 10 | 11 | 12 | 13 |
|---|---|---|---|---|---|---|---|
| Total solid (%) | 36 | 38 | 31 | 25 | 42 | 33 | 38 |
| PH | 4.8 | 4.6 | 2.4 | 2.4 | 3.2 | 4.6 | 4.6 |
| Brookfield Viscosity | 9 | 18 | 5 | 5 | 14 | 8 | 10 |
| Surface Tension | 55 | 56 | 49 | 52 | 70 | 62 | 63 |
| Particle Size (nm) | 112 | 129 | 535 | 146 | 140 | 108 | 110 |
| MFFT (°C) | <5* | <5* | <5* | <5* | 9* | 66 | <5 |

Note:
*samples were measured as compounded latexes, as described earlier, because the latex would not wet the surface of the plate for MFFT.

Table 3

Examples of physical properties of dry films made from polymers of the invention.

| Polymer Film Property | 7 | 8 | 9 | 10 | 11 | 12 | 13 |
|---|---|---|---|---|---|---|---|
| Film Appearance | clear | clear | clear | hazy | clear | clear | clear |
| Tensile, psi (air-dried) | 187 | 237 | 71 | 350 | 312 | 739 | 628 |
| Tensile, psi (cured) | 798 | 1075 | 616 | 851 | 609 | 2607 | 1921 |
| %Elongation (cured) | 399 | 93 | 353 | 14 | 437 | 3 | 11 |
| %MEK Swell (air-dried) | >500 | >500 | 140 | >500 | 223 | >500 | >500 |
| %MEK Swell (cured) | 350 | 240 | 62 | >500 | 494 | 222 | 300 |

Table 3 (continued)

| Examples of physical properties of dry films made from polymers of the invention. | | | | | | | |
|---|---|---|---|---|---|---|---|
| Polymer Film Property | 7 | 8 | 9 | 10 | 11 | 12 | 13 |
| Film $T_g$ (°C) | 14 | -47, 109 | 14 | -39, 101 | 23 | -47, 102 | -47, 109 |

The invention has been described with reference to preferred and alternate embodiments. Obviously, modifications and alterations will occur to others upon the reading and understanding of this specification. The specification is intended to include all such modifications and alterations insofar as they come within the scope of the appended claims or the equivalents thereof.

**Claims**

**1.** A process for forming a block copolymer comprising the steps of:

(a) mixing at least one first monomer, a emulsifier, and water to form a first emulsion,
(b) metering the emulsion into a heated aqueous mixture containing an iodine transfer reagent having at least one active iodine, and a free-radical initiator, the molar ratio of the free-radical initiator to the reagent being 1 to 0.01, the molar ratio of the monomer to the reagent being 10 to 10,000, to form a first polymer emulsion,
(c) metering at least one second monomer, which is different from said first monomer and in the form of a second emulsion, into the first polymer emulsion, and
(d) continuing to heat the mixture to form a block copolymer wherein said first polymer comprises a first block and said second monomer forms the second block.

**2.** The process of claim 1 wherein the iodine transfer reagent is an activated iodide of the formula

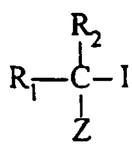

where $R_1$ and $R_2$ are hydrogen, halogen, alkyl, or aryl groups containing 1-50 carbon atoms, and the iodine and the radical stabilizing group Z are attached to the same carbon, and said radical stabilizing group is selected from the group consisting of alkene, aryl, substituted aryl, ester, amide, ketone, nitrile, halogen, carboxylic acid and nitro.

**3.** The process of claim 2 wherein the activated iodine transfer reagent is one selected from the group consisting of ethyl 2-iodopropionate, 4-methylbenzyliodide, 1-iodoethylbenzene, iodotoluic acid, and 2-iodopropionic acid.

**4.** The process of claim 1 wherein the ratio of the initiator to the reagent is 1:1 to 1:3.

**5.** The process of claim 1 wherein the first emulsion is metered into said aqueous mixture in 1-4 hours.

**6.** The process of claim 1 wherein the initiator used is a water-soluble azo initiator.

**7.** The process of claim 1 wherein segmented block copolymers are produced by sequential addition of the first monomer and the second monomer.

**8.** The process of claim 1 wherein functional monomers are incorporated into the first block.

**9.** The process of claim 1 wherein functional monomers are incorporated into the second block.

**10.** The process of claim 1 wherein functional, self-crosslinkable monomers are introduced into the first block.

**11.** The process of claim 1 wherein functional, self-crosslinkable monomers are introduced into the second block.

12. The process of claim 2 wherein the iodine transfer reagent is an activated diiodide reagent selected from the formulas consisting of:

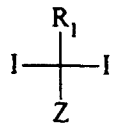 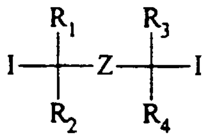 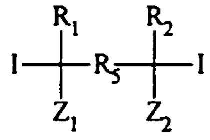 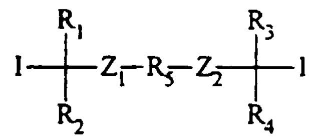

where $R_1$, $R_2$, $R_3$, and $R_4$ are selected from hydrogen, halogen, alkyl or aryl groups, contains 1-50 carbon atoms, the radical stabilizing groups Z, $Z_1$, and $Z_2$ are selected from the group consisting of aryl, substituted aryl, ester, acid, amide, ketone, nitrile, halogen, and nitro. The divalent group $R_5$ is selected from alkyl or aryl groups containing 1-50 carbon atom.

13. The process of claim 12 wherein the molar ratio of the initiator to iodine reagent is from 1:1 to 1:1.5.

14. The process of claim 12 wherein the ratio of soft monomer to hard monomer is between 5 and 1.

15. The process of claim 12 wherein a triblock copolymer with soft middle block and hard side-blocks are formed.

16. The process of claim 12 wherein the free-radical initiator is one selected from the group consisting of peroxo compounds having at least one O-O group.

17. The process of claim 12 wherein the free-radical initiator is an azo-initiator selected from the group consisting of azobisisobutyronitrile, azobiscyanovaleric acid, azobis (hydroxethylcyanovaleramide), azobis (cyclohexanecarbonitrile), 2,2' azobis (4-methoxy-2,4-dimethylvaleronitrile), 2,2'-azobis[2-methyl-N-(2-hydroxyethyl)propionamide].

18. The process of claim 12 wherein the first and second monomer are independently selected from the group consisting of styrene and derivatives thereof, conjugated dienes and derivatives thereof, (meth)acrylic acid and their esters, acrylonitrile, vinyl acetate, vinyl chloride, and vinylidene chloride, and mixtures thereof.

19. The process of claim 12 wherein functional monomers are incorporated into the first block.

20. The process of claim 12 wherein functional monomers are incorporated into the second block.

21. The process of claim 12 wherein functional, self-crosslinkable monomers are introduced into the first block.

22. The process of claim 12 wherein functional, self-crosslinkable monomers are introduced into the second block.

23. The process of claim 1 wherein the monomers are selected from the group consisting of styrene and derivatives thereof, conjugated dienes and derivatives thereof, (meth)acrylic acid and their esters, acrylonitrile, vinyl acetate, vinyl chloride, and vinylidine chloride, and mixtures thereof.

24. A block copolymer emulsion comprising a first block made from a monomer selected from the group consisting of styrene and derivatives thereof, conjugated dienes and derivatives thereof, acrylates and derivatives thereof, acrylonitrile, vinyl acetate, vinyl chloride, and vinylidine chloride, and mixtures thereof, and a second block, which is different from said first block, made from a monomer selected from the group consisting of styrene and derivatives thereof, conjugated dienes and derivatives thereof, acrylates and derivatives thereof, acrylonitrile, vinyl acetate, vinyl chloride, and vinylidine chloride, and mixtures thereof.

25. The block copolymers of claim 24 wherein the polymer has a polydispersity of 1.0 to 2.5.

26. The block copolymers of claim 24 wherein the copolymer has a predetermined molecular weight of 50,000 to 500,000.

27. The block copolymer of claim 24 wherein the copolymer has reactive groups at the chain ends.

**28.** A process for forming an AB block copolymer comprising the steps of:

(a) mixing at least one first monomer, an emulsifier, water, an iodine transfer reagent having at least one active iodine, and a free-radical initiator, the molar ratio of the free-radical initiator to the reagent being 1:1 to 1:100, the molar ratio of the monomer to the reagent being 10 to 1000, to form a first emulsion,
(b) heating the first emulsion to form a polymer emulsion,
(c) metering into the polymer emulsion at least one second monomer, which is different from said first monomer, in the form of a second emulsion,
(d) continuing to heat the mixture to form an AB block copolymer emulsion, wherein said first monomer forms the A block and said second monomer forms the B block.

**29.** A process for forming an ABC block copolymer comprising the steps of:

(a) mixing at least one first monomer, an emulsifier, and water to form a first emulsion,
(b) metering the emulsion into a heated aqueous mixture containing an iodine transfer reagent having at least one active iodine and a free-radical initiator, the molar ratio of the free-radical initiator to the reagent being 1:1 to 1:100, the molar ratio of the monomer to the reagent being 10:1 to 1000:1, to form a polymer emulsion,
(c) metering into polymer emulsion at least one second monomer, which is different from said first monomer, in the form of a second stable emulsion,
(d) continuing to heat the mixture to form a block copolymer emulsion, and
(e) metering into the block copolymer emulsion at least one third monomer, which is different from said second monomer, but could be the same or different from said first monomer, in the form of a third stable emulsion.

**30.** A process for forming a block copolymer emulsion comprising the steps of:

(a) heating a heterogeneous aqueous mixture of at least one first monomer, a transition metal halide at its oxidized state, an organic ligand, a polymerization initiator, and an emulsifier, to form a first polymer emulsion, wherein the polymer has a halogen chain-end,
(b) metering at least one second monomer, which is different from said first monomer and in the form of an emulsion, into the first polymer emulsion,
(c) continuing to heat the mixture to form a block copolymer wherein said first polymer comprises a first block and said second monomer forms a second block.

**31.** The process of claim 30 wherein the transition metal halide is selected from the group consisting of metal chloride and metal bromides.

**32.** The process of claim 30 wherein the polymerization initiator is a combination of an organic halide, containing an activated halogen, a transition metal halide at its reduced state, and said ligand.

**33.** The process of claim 30 wherein the polymerization initiator is a combination of transition metal halide at its oxidized state, a metallic form of the same transition metal, an organic halide, containing an activated halogen, and said ligand.

**34.** The process of claim 32 wherein the transition metal halide in its oxidized state is selected from the group consisting of copper bromide, copper chloride, iron chloride, iron bromide, and nickel bromide.

**35.** The process of claim 33 wherein the transition metal halide in its oxidized state is selected from the group consisting of copper bromide, copper chloride, iron chloride, iron bromide, and nickel bromide.

**36.** The process of claim 30 wherein the ratio of the initiator to the reagent is from 1:1 to 1:3.

**37.** The process of claim 30 wherein the second monomer emulsion is metered into said first polymer emulsion in 1 to 4 hours.

**38.** The process of claim 30 wherein the initiator used is a water-soluble azo initiator.

**39.** The process of claim 30 wherein segmented block copolymers are produced by sequential addition of the first monomer and the second monomer.

**40.** The process of claim 30 wherein functional monomers are incorporated into the first block.

**41.** The process of claim 30 wherein functional monomers are incorporated into the second block.

**42.** The process of claim 30 wherein functional, self-crosslinkable monomers are introduced into the first block.

**43.** The process of claim 30 wherein functional, self-crosslinkable monomers are introduced into the second block.

**44.** The process of claim 30 wherein the molar ratio of initiator to transition metal halide is 1:1 to 1:1.5.

**45.** The process of claim 30 wherein the ratio of soft monomer to hard monomer is between 5 and 1.

**46.** The process of claim 30 wherein a triblock copolymer with soft middle block and hard side-blocks are formed.

**47.** The process of claim 30 wherein the free-radical initiator is one selected from the group consisting of peroxo compounds having at least one O-O group.

**48.** The process of claim 30 wherein the free-radical initiator is an azo-initiator selected from the group consisting of azobisisobutyronitrile, azobiscyanovaleric acid, azobis (hydroxethylcyanovaleramide), azobis (cyclohexanecarbonitrile), 2.2' azobis (4-methoxy-2,4-dimethylvaleronitrile), 2.2'-azobis[2-methyl-N-(2-hydroxyethyl)propionamide].

**49.** The process of claim 30 wherein the first and second monomer are independently selected from the group consisting of styrene and derivatives thereof, conjugated dienes and derivatives thereof, (meth)acrylic acid and their esters, acrylonitrile, vinyl acetate, vinyl chloride, and vinylidine chloride, and mixtures thereof.

**50.** The process of claim 48 wherein functional monomers are incorporated into the first block.

**51.** The process of claim 48 wherein functional monomers are incorporated into the second block.

**52.** The process of claim 48 wherein functional, self-crosslinkable monomers are introduced into the first block.

**53.** The process of claim 48 wherein functional, self-crosslinkable monomers are introduced into the second block.

**54.** The process of claim 30 wherein said polymerization initiator is a free-radical initiator.

**55.** A block copolymer emulsion comprising a first block polymerized from monomers selected from the group consisting of styrene and derivatives thereof, conjugated dienes and derivatives thereof, acrylates and derivatives thereof. acrylonitrile, vinyl acetate, vinyl chloride, and vinylidine chloride, and mixtures thereof, a second block which is different from said first block and polymerized from monomers selected from the group consisting of styrene and derivatives thereof, conjugated dienes and derivatives thereof, acrylates and derivatives thereof, acrylonitrile, vinyl acetate, vinyl chloride, and vinylidine chloride, and mixtures thereof, and a third block which is different from said second block and polymerized from monomers selected from the group consisting of styrene and derivatives thereof, conjugated dienes and derivatives thereof, acrylates and derivatives thereof, acrylonitrile, vinyl acetate, vinyl chloride, and vinylidine chloride, and mixtures thereof.

**56.** The block copolymers of claim 30 wherein the polymer has a polydispersity of 1.0 to 2.5.

**57.** The block copolymers of claim 30 wherein the polymer has a predetermined molecular weight of 50,000 to 500,000.

**58.** The block copolymer of claim 30 wherein the polymer has reactive groups at the chain ends.

**59.** A process for forming an AB block copolymer, the process comprising the steps of:

(a) mixing at least one first monomer and an emulsifier to form a first emulsion,
(b) metering said emulsion into a heated heterogeneous aqueous mixture of at least one first monomer, a transition metal halide at its oxidized state, an organic ligand, and a free radical initiator, and a emulsifier, to form a first polymer emulsion wherein said polymer has a halogen chain-end,

(c) metering at least one second monomer, which is different from said first monomer and in the form of a second stable emulsion, into the first polymer emulsion,

(d) continuing to heat the mixture to form an AB block copolymer wherein said first polymer comprises a first block and said second monomer forms the second block.

**60.** A process for forming an ABC block copolymer, the process comprising the steps of:

(a) heating a heterogeneous aqueous mixture of at least one first monomer, a transition metal halide at its oxidized state, a organic ligand, a polymerization initiator, and a emulsifier, to form a first polymer emulsion wherein said polymer has a halogen chain-end,

(b) metering at least one second monomer, which is different from said first monomer and in the form of an emulsion, into the first polymer emulsion,

(c) continuing to heat the mixture to form a block copolymer emulsion wherein said first polymer comprises a first block and said second monomer forms the second block,

(d) metering at least one third monomer, which is different from said second monomer into the block copolymer emulsion whereby said third monomer forms the third block of the ABA block copolymer.

**61.** The process of claim 59 wherein said polymerization initiator is a free-radical initiator.

**62.** The process of claim 1 wherein the heated aqueous mixture further contains a seed polymer emulsion.

**63.** The process of claim 60 wherein said polymerization initiator is a free-radical initiator.

**64.** The process of claim 30 wherein the heated aqueous mixture further contains a seed polymer emulsion.

**65.** The use of the block copolymer emulsion of claim 24 in an adhesive, binder or coating composition as a tackifier, adhesion promoter, rheology modifier or compatibilizer.

**66.** The use of the block copolymer emulsion of claim 55 in an adhesive, binder or coating composition as a tackifier, adhesion promoter, rheology modifier or compatibilizer.

**67.** The use of the block copolymer emulsion of claim 24 as an adhesive or binder.

**68.** The use of the block copolymer emulsion of claim 55 as an adhesive or binder.

**69.** The use of the block copolymer emulsion of claim 24 as a coating.

**70.** The use of the block copolymer emulsion of claim 55 as a coating.

European Patent Office

# EUROPEAN SEARCH REPORT

Application Number
EP 99 10 6664

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 4 243 770 A (TATEMOTO MASAYOSHI ET AL) 6 January 1981<br>* column 2, line 21 - column 3, line 65 ; column 1, line 56 - column 2, line 17 ; column 4, line 26-39 ; reference examples 2, 3-5, 1 ; all examples *<br>* column 6, line 44-48 *<br>--- | 1,2,4, 6-29,55, 62,65-70 | C08F293/00<br>C08F2/38<br>C08F8/18<br>C08F14/16<br>C09J153/00<br>C09D153/00 |
| X | US 4 158 678 A (TATEMOTO MASAYOSHI ET AL) 19 June 1979 | 1,2,4, 6-17, 19-22, 28,29, 55,62 | |
| Y | * column 2, line 43 - column 5, line 40 ; column 6, line 31 ; column 2, line 3-22 ; reference example 2 + example 4 *<br>* column 1, line 11-51; examples 5-16 *<br>--- | 3,5,18, 23-27, 30-54, 56-61, 63-70 | |
| | | | TECHNICAL FIELDS SEARCHED (Int.Cl.6) |
| D,Y | US 5 455 319 A (BAK PHILIP I ET AL) 3 October 1995<br>* example 4 ; claim 1 ; table 5 ; column 4, line 8 - column 5, line 20 ; column 1, line 46-50 ; column 3, line 34-44 *<br>* column 2, line 14-55 *<br>--- | 3,5,18, 23-27 | C08F<br>C09J<br>C09D<br>C07C |
| D,Y | EP 0 489 370 A (DAIKIN IND LTD) 10 June 1992<br>* claim 1 ; page 2, line 5-15 ; page 2, line 38-45 *<br>* page 3, line 31 - page 5, line 39; example 1 *<br>--- | 65-70 | |
| D,Y | WO 96 30421 A (MATYJASZEWSKI KRZYSZTOF ;WANG JIN SHAN (US)) 3 October 1996<br>* the whole document *<br>---<br>-/-- | 30-54, 56-61, 63,64 | |

The present search report has been drawn up for all claims

| Place of search | Date of completion of the search | Examiner |
|---|---|---|
| THE HAGUE | 7 June 1999 | Hammond, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 99 10 6664

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,A | MATYJASZEWSKY ET AL: "Macromolecules, Vol.28, pages 2093-2095 and 8051-8056 (1995)" XP002105023<br>* the whole document * | 1-70 | |
| A | US 5 345 018 A (BAK PHILIP L ET AL) 6 September 1994<br>* abstract * | 1-70 | |
| A | WO 97 22636 A (DU PONT ;HUNG MING HONG (US); LOGOTHETIS ANESTIS LEONIDAS (US); YA) 26 June 1997<br>* abstract * | 1-70 | |
| | | | TECHNICAL FIELDS SEARCHED (Int.Cl.6) |

The present search report has been drawn up for all claims

| Place of search | Date of completion of the search | Examiner |
|---|---|---|
| THE HAGUE | 7 June 1999 | Hammond, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 99 10 6664

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-1999

| Patent document cited in search report | Publication date | Patent family member(s) | Publication date |
|---|---|---|---|
| US 4243770 A | 06-01-1981 | JP 1585063 C | 31-10-1990 |
| | | JP 53125491 A | 01-11-1978 |
| | | JP 63041928 B | 19-08-1988 |
| | | DE 2815187 A | 19-10-1978 |
| | | FR 2386561 A | 03-11-1978 |
| | | GB 1603481 A | 25-11-1981 |
| | | GB 1603482 A | 25-11-1981 |
| US 4158678 A | 19-06-1979 | JP 1174816 C | 28-10-1983 |
| | | JP 53003495 A | 13-01-1978 |
| | | JP 58004728 B | 27-01-1983 |
| | | DE 2729671 A | 12-01-1978 |
| | | FR 2423500 A | 16-11-1979 |
| | | GB 1574089 A | 03-09-1980 |
| US 5455319 A | 03-10-1995 | EP 0617057 A | 28-09-1994 |
| | | JP 6298816 A | 25-10-1994 |
| EP 0489370 A | 10-06-1992 | JP 2100278 C | 22-10-1996 |
| | | JP 4202303 A | 23-07-1992 |
| | | JP 8026087 B | 13-03-1996 |
| | | CN 1062736 A | 15-07-1992 |
| | | DE 69124583 D | 20-03-1997 |
| | | DE 69124583 T | 12-06-1997 |
| | | US 5439980 A | 08-08-1995 |
| WO 9630421 A | 03-10-1996 | US 5763548 A | 09-06-1998 |
| | | AU 5306996 A | 16-10-1996 |
| | | CA 2216853 A | 03-10-1996 |
| | | CN 1183107 A | 27-05-1998 |
| | | EP 0817806 A | 14-01-1998 |
| | | JP 10509475 T | 14-09-1998 |
| US 5345018 A | 06-09-1994 | EP 0617057 A | 28-09-1994 |
| | | JP 6298816 A | 25-10-1994 |
| | | US 5430208 A | 04-07-1995 |
| WO 9722636 A | 26-06-1997 | EP 0868447 A | 07-10-1998 |

EPO FORM P0459

For more details about this annex : see Official Journal of the European Patent Office, No. 12/82